# EUROPÄISCHE PATENTSCHRIFT

(11) **EP 2 270 350 B1**
(45) Veröffentlichungstag und Bekanntmachung des Hinweises auf die Patenterteilung: **05.06.2013**
(21) Anmeldenummer: 10168195.5
(22) Anmeldetag: 01.07.2010
(51) Int. Cl.: F16D 3/30

(54) **Gleichlauf-Universalgelenk**
Synchronized universal joint
Articulation universelle à synchronisme

(30) Priorität: 01.07.2009 DE 102009032132; 21.07.2009 DE 102009027855
(43) Veröffentlichungstag der Anmeldung: 05.01.2011
(73) Patentinhaber: Nassir, Khalid A., 0 Maysan Amara (IQ)
(72) Erfinder: Nassir, Khalid A., 0 Maysan Amara (IQ)
(74) Vertreter: Kreutzer, Ulrich

(56) Entgegenhaltungen:
- WO-A1-02/077479
- FR-E- 92 786
- US-A- 5 954 586

## Beschreibung

### TECHNISCHES GEBIET DER ERFINDUNG

Die Erfindung betrifft ein Gleichlauf-Universalgelenk, eine Gelenkwelle mit dem Gleichlauf-Universalgelenk und eine Achse für ein Kraftfahrzeug, umfassend eine solche Gelenkwelle sowie Kraftfahrzeuge mit einer solchen Achse.

### TECHNISCHER HINTERGRUND DER ERFINDUNG

Die Kraftübertragung von einer Welle zur anderen ist am schwierigsten, wenn die betreffenden Wellen nicht in einer direkten Linie zueinander ausgerichtet sind, wie dies stets im Fall von Autos und Lastwagen ist, wo Kraft vom Getriebe zu den Rädern übertragen werden muß. In diesem Fall von Autos oder Lastwagen ist das Problem besonders schwierig, da der Winkel zwischen dem Getriebe und den Rädern sich kontinuierlich ändert während die Federung arbeitet. Dieses Problem wird schwieriger bei Frontantriebsfahrzeugen und Allradantriebsfahrzeugen, da der Winkel nicht nur mit der arbeitenden Federung sich ändert, sondern auch beim Lenken des Fahrzeugs.

Das Antriebsgelenk ist eine Verbindung, die Rotation zwischen Wellen überträgt, deren Rotationsachsen koplanar sind aber nicht koinzidieren. Das Antriebsgelenk ist nicht ein gleichlaufendes Gelenk, wenn es einen Nullwinkel zwischen den Eingangsund Ausgangswellen gibt und wenn, während die Eingangswelle bei konstanter Geschwindigkeit angetrieben wird, die Ausgangswelle zweimal pro Umdrehung beschleunigen oder verlangsamen wird. Dieser Effekt kann vernachlässigbar sein für kleine Beugungswinkel, aber er verstärkt sich mit dem Beugungswinkel und kann Vibrationen hervorrufen. Demgegenüber überträgt ein Gleichlaufgelenk-Universalgelenk Rotation zwischen Wellen ohne diesen nachteiligen Effekt.

Allgemein finden sich Darstellungen von Antriebsgelenken des Standes der Technik in "Kinematic Geometry of Mechanisms, K.H. Hunt, Oxford Engineering Science Series, S. 393-402, 1978" und in "Encyclopedia of Science and Technology, Part 14, S. 254-256, McGraw - Hill.1982".

Optimierbar sind bei einem Gelenk hauptsächlich die folgenden Parameter:
1) Maximaler Beugungswinkel
2) Gleichläufigkeit der durch es übertragenen Geschwindigkeit
3) Größe bzw. Kompaktheit des Gelenks
4) mechanische Effizienz

Gemäß US2006/0089202 A1 wird Gleichlauf durch ein Doppelkardangelenk erzielt, jedoch zu lasten der Kompaktheit des Gelenks. Gemäß US 7,121,950 B2 wird Gleichlauf mit Hilfe eines gleitenden Schlittens in Innennuten einer Hülse erzielt. WO 2005/042995 zeigt ein Gleichlaufgelenk mit Kugellaufbahnen.

US 7,144,326 zeigt in einem Gleichlaufgelenk einen Erzwingungsmechanismus, um Gelenkteile in der homokinetischen Ebene zu halten. Als Alternativlösung zu US 7,144,326 zeigt US 5,954,586 ein Gleichlaufgelenk gemäß dem Oberbegriff des Anspruchs 1, wobei gleitende Teile erforderlich sind.

### OFFENBARUNG DER ERFINDUNG

Aufgabe der Erfindung ist es, den Stand der Technik dahingehend zu verbessern, daß eine überlegene Kombination erzielt werden kann unter den Parametern:
1) Maximaler Beugungswinkel,
2) Gleichläufigkeit,
3) Kompaktheit des Gelenks, und/oder
4) mechanische Effizienz

Aufgabe der Erfindung ist es auch, ein effizient herstellbares Gelenk bereitzustellen, das eine optimierte Kombination der obigen Parameter 1) bis 4) ermöglicht.

Dazu betrifft die Erfindung ein Gleichlauf-Universalgelenk, umfassend eine erste und eine zweite Gelenkhälfte und ein zentrates Verbindungsteil zur Verbindung der ersten und zweiten Gelenkhälften miteinander, wobei jede der Gelenkhälften umfaßt:
- eine erste Kugelgelenkhälfte, mit einer Verbindung zu dem zentralen Verbindungsteil.
- eine Welle mit einer ersten Wellendrehachse, wobei die Welle an einem stirnseitigen Ende eine Gabel, insbesondere eine einschenklige Gabel, umfaßt,
- ein Innenstück, welches eine erste Innenstückdrehachse und eine zweite Innenstückdrehachse aufweist, welche orthogonal zueinander angeordnet sind,
- eine um die erste Innenstückdrehachse drehbare Verbindung zwischen der Gabel und dem Innenstück, wobei die Wellendrehachse und die erste Innenstückdrehachse orthogonal zueinander angeordnet sind,
- einen Wellenzapfen mit einem ersten Ende an dem stirnseitigen Ende der Welle und einem zweiten Ende, das eine zweite Kugelgelenkhälfte ausbildet.

Erfindungsgemäß sind jeweils um die zweite Innenstückdrehachse drehbare Verbindungen zwischen jedem Innenstück der ersten und zweiten Gelenkhälfte und dem zentralen Verbindungsteil vorgesehen und daß für jede Gelenkhälfte
- die Verbindung der ersten Kugelgelenkhälfte zu dem zentralen Verbindungsteil drehbar um eine Achse ist, die zu der ersten Innenstückdrehachse orthogonal ist,
- der Wellenzapfen eine um die Wellendrehachse drehbare Verbindung zu der Welle hat und die Welle von dem zentralen Verbindungsteil beabstandet,
- ein Drehpunkt eines durch die ersten und zweiten Kugelgelenkhälften ausgebildeten Kugelgelenks versetzt zur Drehachse der Verbindung unter der ersten Kugelgelenkhälfte und dem zentralen Verbindungsteil und zur Wellendrehachse angeordnet ist.

Das erfindungsgemäße Gelenk kann leicht gebaut werden, insbesondere, um beim Einbau in eine Antriebswelle eines Kraftfahrzeugs ungefederte Massen zu verringern und so Federungskomfort und/oder Fahrsicherheit zu verbessern.

Die Erfindung ist eine Ausgestaltung ohne gleitende Teile, beruhend auf einem Kurbelmechanismus, um Teile, die die Wellen beabstanden in der homokinetischen Ebene zu halten, um es dem Gelenk zu erleichtern, bei einem Beugungswinkel zwischen Rotationsachsen von zwei Flanschen der Wellen zu arbeiten, der 100°, d.h. +/- 50° oder mehr erreicht. Hohe Lebensdauer gepaart mit konstantem Gleichlauf sind Vorteile des Antriebsgelenks.

Die Erfindung erzielt Verbesserungen bei allen oben genannten Parametern 1) bis 4) und, da einige der in US 5,954,586 gezeigten gleitenden Teile nicht notwendig sind, auch gute mechanische Effizienz.

Gemäß einer bevorzugten Ausführungsform ist die erste Kugelgelenkhälfte in einer Bohrung gelagert, die durch das zentrale Verbindungsteil durch den Schnittpunkt der zweiten Innenstückdrehachsen beider Gelenkhälften verläuft. Bei der bevorzugten Ausführungsform sind vorzugsweise bei wenigstens einer der Gelenkhälften, bevorzugter in beiden Gelenkhälften, die Wellenzapfen in der Bohrung mit einem Nadellager gelagert. Beim Zusammenbau des Gleichlauf-Universalgelenks können z.B. die beiden Teile der ersten Kugelgelenkhälfte in die Bohrung, welche sie lagern soll, von je einer Seite eingesteckt werden, insbesondere, ohne weitere Montageschritte zum Einbau der ersten Kugelgelenkhälfte.

Bei der bevorzugten Ausführungsform sind die Innenstücke, die Gabeln die Wellenzapfen und/oder die ersten Kugelgelenkhälften beider Gelenkhälften identisch ausgebildet. Dadurch wird besonders die Herstellung und Teilelogistik des Gleichlauf-Universalgelenks vereinfacht. Es wird ein effizient herstellbares Gelenk bereit gestellt, das eine optimierte Kombination der obigen Parameter 1) bis 4) ermöglicht.

Bei wenigstens einer der Gelenkhälften, vorzugsweise in beiden Gelenkhälften, kann der Wellenzapfen einen Gelenkkopf des Kugelgelenks ausbilden und die erste Kugelgelenkhälfte eine Gelenkpfanne des Kugelgelenks aufweisen. Um große maximale Beugungswinkel des Gleichlauf-Universalgelenks der Erfindung zu erzielen, kann weiterhin in wenigstens einer der Gelenkhälften, vorzugsweise in beiden Gelenkhälften, der Wellenzapfen in einer Bohrung in der Welle gelagert sein, bei einer Tiefe der Bohrung, die vorzugsweise gleich dem Radius des Gelenkkopfes ist. Dabei können weiter bei wenigstens einer der Gelenkhälften, vorzugsweise in beiden Gelenkhälften, Wellenzapfen in einer Bohrung in der Welle mit Nadellagern gelagert sein.

Bei wenigstens einer der Gelenkhälften einer Ausführung mit einschenkligen Gabeln, vorzugsweise in beiden Gelenkhälften, weist die Gabel zur Verbindung mit dem Innenstück bevorzugt ein Auge auf und das Innenstück weist auf einer der Innenstückdrehachsen einen Zapfen mit einer Außennut auf.

Das erfindungsgemäße Gleichlauf-Universalgelenk kann in einer Gelenkwelle eingesetzt werden. Diese Gelenkwelle kommt vorteilhaft in der Vorderachse für ein Kraftfahrzeug zur Anwendung.

Weitere Einzelheiten und Vorteile der Erfindung ergeben sich aus der nachfolgenden, rein beispielhaften und nicht beschränkenden Beschreibung eines beispielhaften Gleichlauf-Universalgelenks der Erfindung in Verbindung mit der Zeichnung. Für funktionsmäßig gleiche Teile sind dabei gleiche Bezugszeichen verwendet.

### KURZE BESCHREIBUNG DER ZEICHNUNGSFIGUREN

Fig. 1 ist eine perspektivische isometrische Darstellung von Teilen eines erfindungsgemäßen Gleichlauf-Universalgelenks mit einschenkligen Gabeln.

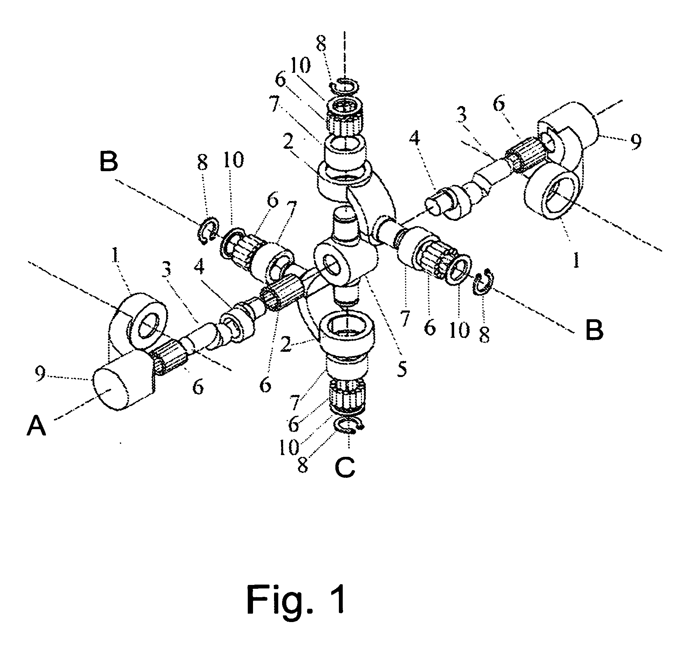

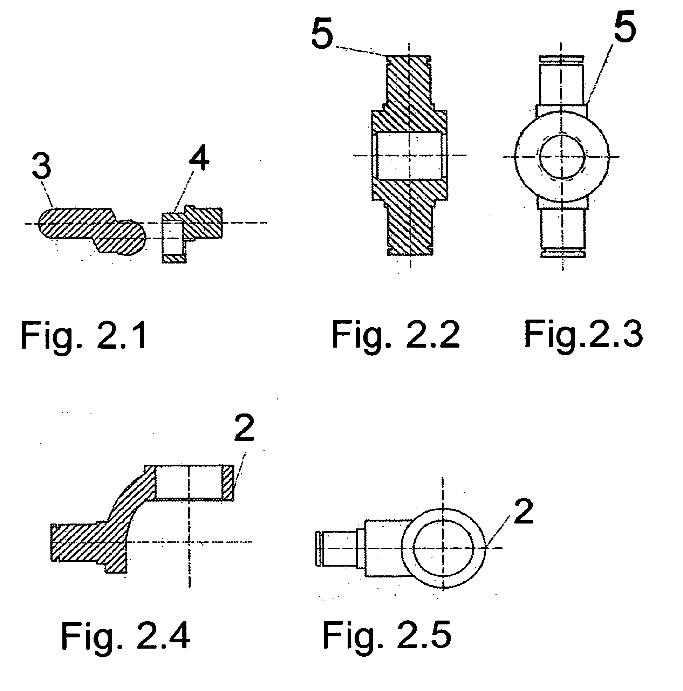

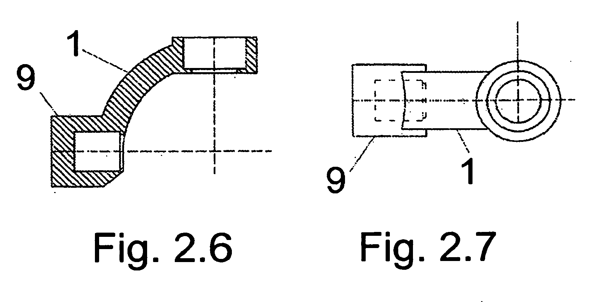

Fig. 2.1 zeigt eine Schnittansicht von einem Wellenzapfen und einer ersten Kugelgelenkhälfte und Fig. 2.2 zeigt eine Schnittansicht des zentralen Verbindungsteils eines erfindungsgemäßen Gleichlauf-Universalgelenks, wobei die Schnittebene jeweils die Ebene der in der linken Hälfte der Fig. 1 dargestellten Gabel ist. Fig. 2.3 ist eine Draufsicht auf das in Fig. 2.2 dargestellte zentrale Verbindungsteil. Fig. 2.4 zeigt einen Schnitt in der Ebene der in Fig. 1 gezeigten Rotationsachsen B und C verlaufenden Ebene durch das Innenstück des in Fig. 1 gezeigten erfindungsgemäßen Gleichlauf-Universalgelenks und Fig. 2.5 zeigt eine Draufsicht auf das Auge dieses Innenstücks. Fig. 2.6 zeigt einen Schnitt in der Ebene der in Fig. 1 gezeigten Rotationsachsen A und B verlaufenden Ebene durch eine Gabel des in Fig. 1 gezeigten erfindungsgemäßen Gleichlauf- Universalgelenks und Fig. 2.7 zeigt eine Draufsicht auf das Auge dieser Gabel.

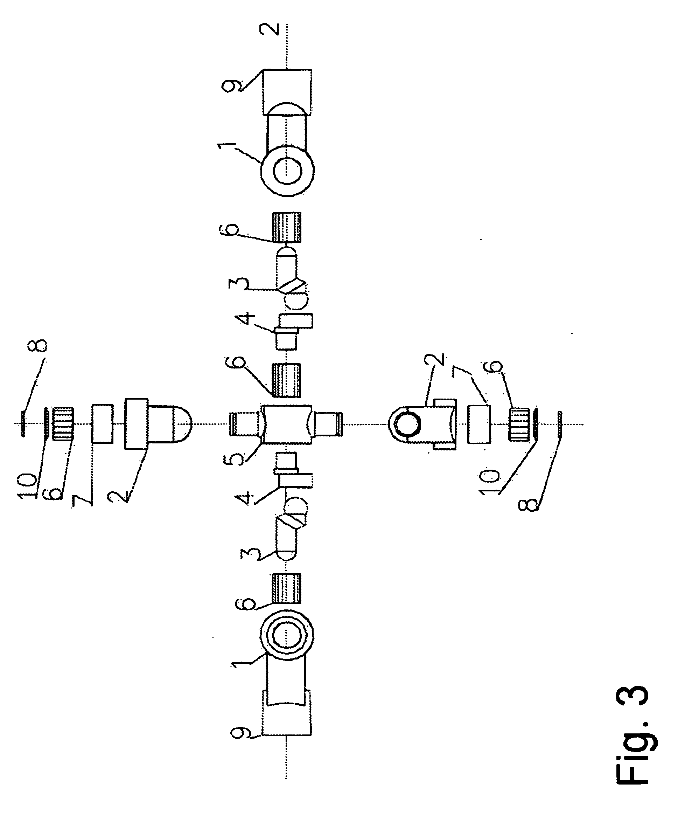

Fig. 3 zeigt eine Draufsicht auf die in Fig. 1 dargestellten Teile aus einer Ebene parallel zu jener des in Fig. 2.1 gezeigten Schnittes.
Fig. 4.1, 4.2 und 4.3 zeigen mit unterschiedlichen Beugungswinkeln perspektivische Darstellungen eines aus den in Fig. 1 dargestellten Teilen zusammengesetzten Gleichlauf-Universalgelenks.

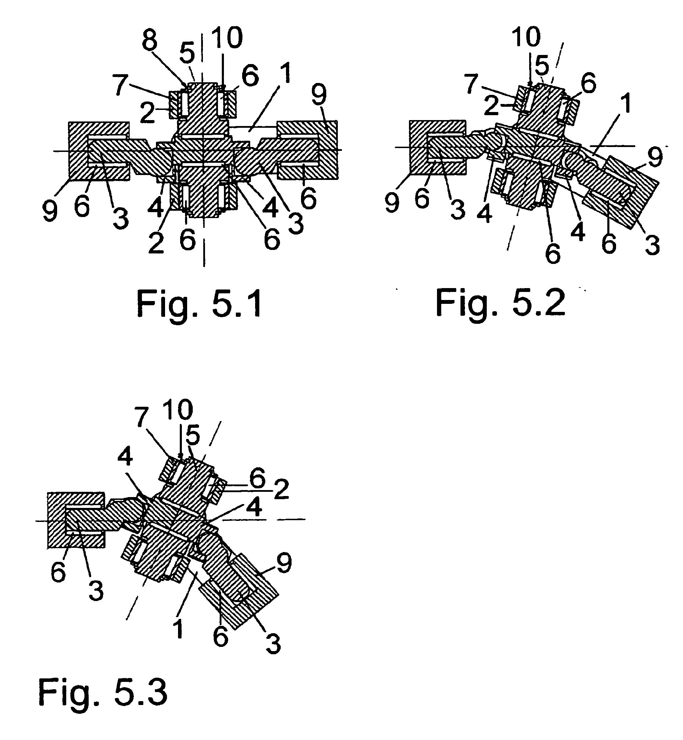

Fig. 5.1, 5.2 und 5.3 zeigen jeweils Schnittansichten des in Fig. 4.1, 4.2 und 4.3 gezeigten Gleichlauf-Universalgelenks, wobei die Schnittebene jeweils die Ebene des in der Darstellung in Fig. 4.1, 4.2 und 4.3 vertikal ausgerichteten Innenstücks ist.
Fig. 6 ist eine vergrößerte Darstellung der in Fig. 5.2 gezeigten Wellen, ersten Kugelgelenkhälften und Wellenzapfen mit deren Nadellagern.
Fig. 7.1, 7.2 und 7.3 sowie 8.1, 8.2 und 8.3 zeigen perspektivische Ansichten der in Fig. 6 dargestellten Kugelgelenke jeweils mit den in Fig. 4.1, 4.2 und 4.3 veranschaulichten Beugungswinkeln eines Gleichlauf-Universalgelenks der Erfindung.
Fig. 9.1 - 9.4, 10.1 - 10.4, 11.1 - 11.4 veranschaulichen Arbeitspositionen des durch die in Fig. 6 dargestellten Teile ausgebildeten Kurbelmechanismus eines Gleichlauf-Universalgelenks der Erfindung.
Fig. 12.1 - 12.3 zeigen mit derselben Schnittebene wie Fig. 5.1 - 5.3 verschiedene Arbeitspositionen von in Fig. 1 gezeigten Gabeln, Innenstücken und zentralem Verbindungsteil, wobei eine Außenkante der Welle, von der aus keine der Gabeln abzweigt, durch Abfasung modifiziert ist.
Fig. 13 zeigt eine perspektivische Ansicht der Anordnung zweier Teile eines in Fig. 1 gezeigten Gleichlauf-Universalgelenks, welche jeweils die Wellenenden und davon verzweigenden einschenkligen Gabeln umfassen und gegenüber jenen in Fig. 1 gezeigten durch je zwei Stopperarme modifiziert sind.

Das veranschaulichte Gleichlauf-Universalgelenk ist eine Ausgestaltung, die symmetrisch um ihren Zentralpunkt O ist und besteht aus:
- zwei identischen Gabeln 1, wobei jede Gabel 1 einschenklig mit einem Sitz ausgebildet ist, welcher eine zylindrische Ausnehmung des Nadellagers 6 für einen Wellenzapfen 2 enthält, und ein Auge hat, um Einsatzstücke 7 in Form von Buchsen aufzunehmen; der Sitz fällt dabei mit der Stirnseite einer an der Gabel 1 angebrachten Welle 9 zusammen, die einen Flansch ausbildet; Welle 9 und Gabel 1 können einstückig oder als zwei separate Einheiten ausgebildet sein, was es auch ermöglicht, die Gabel z.B. aus einem Kohlenstoffstahl, die Gabel aus einer Stahllegierung herzustellen;
- zwei identischen Innenstücken 2, wobei jedes von ihnen ein Auge hat, um eine Buchse aufzunehmen, und einen Zapfen mit einer Außennut, um einen Sicherungsring 8 aufzunehmen; dabei können die beiden Augen jeweils halbkugelförmig ausgebildet sein;
- zwei identischen Wellenzapfen 3, welche kleine Wellen mit einer endständigen Halbkugel sind und jeweils exzentrisch eine Kugel an einem Ende aufweisen,
- zwei identischen erste Kugelgelenkhälften 4, welche Zapfen aufweisen, mit denen sie in dem zentralen Verbindungsteil 5 mit einem Nadellager 6 gelagert sind, und zu den Zapfen exzentrische Pfannen mit zylindrischen Ausnehmungen für zweite Kugelgelenkhälften aufweisen. Die Exzentrizität dieser Pfannen ist gleich der Exzentrizität der endständigen Kugel des Wellenzapfens 3.

Das zentrale Verbindungsteil 5 ist ein Körper mit hohlzylindrischer Form und zwei von der Mantelfläche der hohlzylindrischen Form diametral zueinander ausgehenden Zapfen, um mit Nadellagern 6 die ersten Kugelgelenkhälften über die Augen der Innenstücke 2 zusammen zu halten.

Das veranschaulichte Gleichlauf-Universalgelenk besteht daher weiter aus
- Nadellagern 6
- Einsatzstücken 7 in Form von Buchsen für die Nadellager 6 und
- Sperringen 10 und Federringen 8.

Die Federringe 8 halten dabei über die Sperringe 10 in Form von Unterlegscheiben die Nadellager 6 und Buchsen auf den Zapfen des zentralen Verbindungsteils 5 und der Innenstücke 2, indem sie in deren Nuten einrasten.

Eine Analyse des dargestellten Gelenks zeigt zwei Mechanismen:
1) Kraftübertragungsmechanismus, bestehend aus einschenkligen Gabeln 1, Innenstücken 2 mit Drehzapfen, zentralem Verbindungsteil 5, Einsatzstücken 7 mit Nadellagern 6 und Sicherungsringen 8,
2) Zentriermechanismus, bestehend aus den Gabeln 1 und Innenstücken 2.

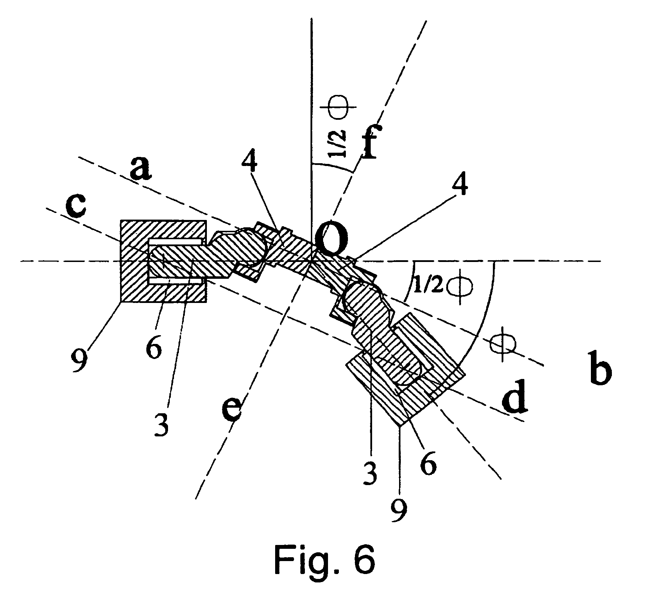

Wie Fig. 6 für einen Beugungswinkel Φ zeigt, trifft der Zentralpunkt ○, welcher auch zentraler Punkt des Kreuzkörpers ist, stets mit dem Schnittpunkt der Achsen der beiden Wellen 9 zusammen. Dies ist so bei allen Arbeitswinkeln des Gelenks aufgrund der Geometrie des Gelenks.

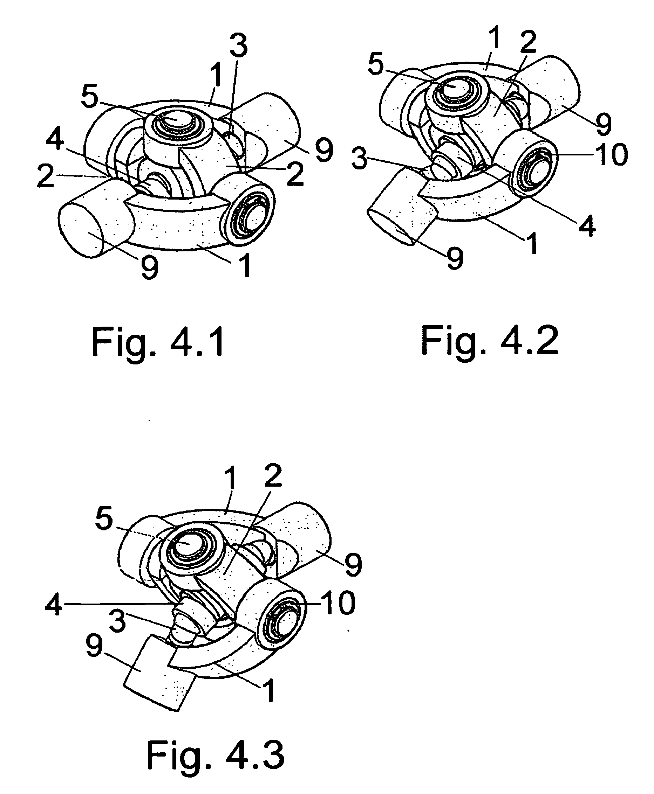

Fig. 4.1 - 4.3 zeigen jeweils Beugungswinkel von 0, 30° bzw. 50°.

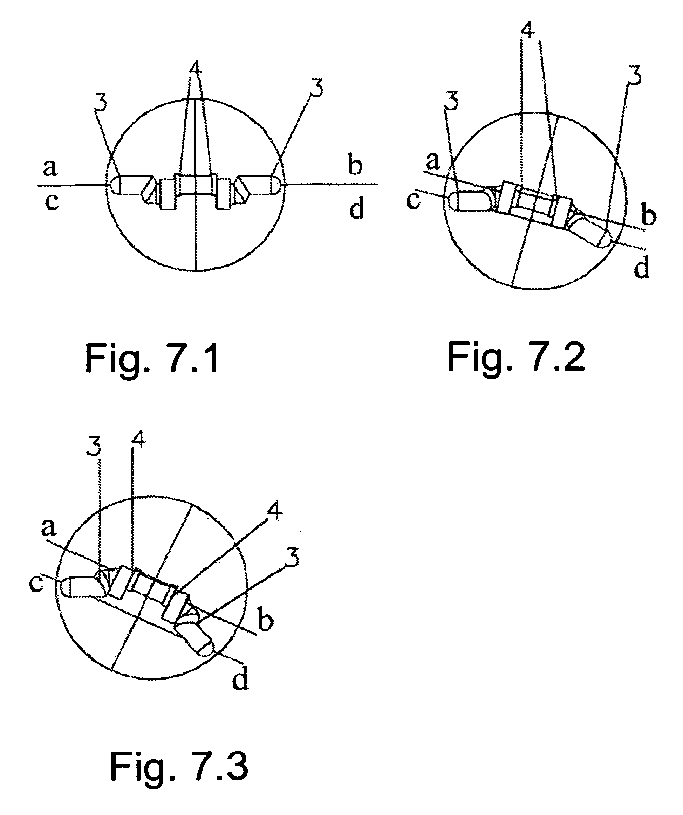

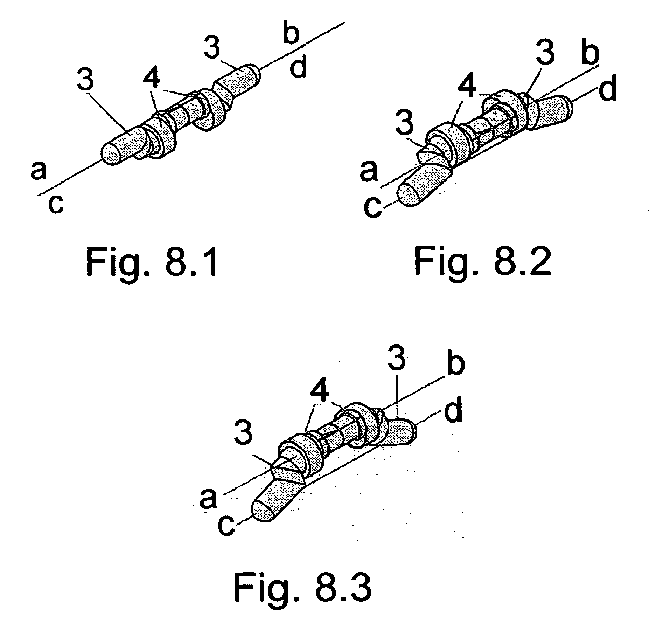

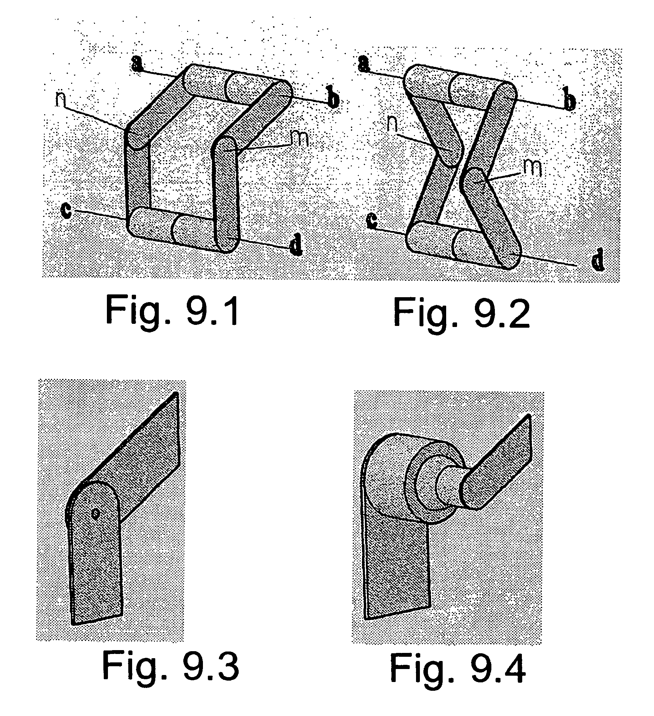

Fig. 6 zeigt von den ersten Kugelgelenkhälften 4 die sich durch das zentrale Verbindungsteil 5 erstreckende Drehachse a-b. Weiter ist eine durch die Lagerung der Wellenzapfen 3 in den Wellen 9 verlaufende Linie c-d dargestellt. Beide Linien definieren Achsen eines Kurbelmechanismus des Gelenks. Für die Kurbelmechanismusarbeitsweise des Gelenks in einem von 0 verschiedenen Beugungswinkel veranschaulichen Fig. 7.1 bis 11.4, daß die Linie a-b immer parallel zur Linie c-d ist. Fig. 9.1 bis 9.2 veranschaulichen Arbeitswinkel des Kurbelmechanismus und daß die Linie a-b immer parallel zur Linie c-d ist. Für den Kurbelmechanismus zeigen Fig. 8.1 bis 11.4 ferner Kurbelmechanismusgelenke m, n als Bolzengelenk (z.B. in Fig.9.3) oder alternativ als Kugelgelenk (z.B. in Fig. 9.4).

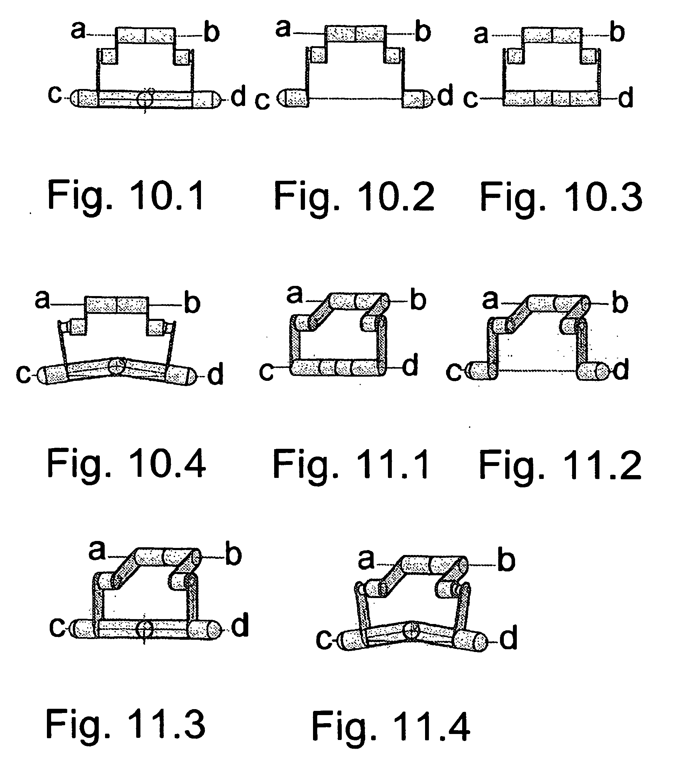

Fig. 10.1 bis 10.4 unterscheiden sich jeweils von Fig. 11.1 bis 11.4 darin, daß um 30° um die in Fig. 6 gezeigte Linie e-f eine der Wellen 9 rotiert wurde.

Wie die gezeigte Linie a-b veranschaulicht, wird die Achse des Innenstücks 2 immer parallel zur Linie c-d sein, welche durch die Zentren der endständigen Halbkugeln der Wellenzapfen 3 verläuft, und senkrecht zur in Fig. 6 dargestellten Linie e-f auf der Linie c-d und a - b. Die Linie e-f liegt stets in einer Ebene, die den Winkel zwischen den Wellen Φ zweiteilt (homokinetische Ebene), so daß der Kreuzkörper des zentralen Verbindungsteils des Gelenks immer in der homokinetischen Ebene zwischen den beiden Wellen 9 sein wird.

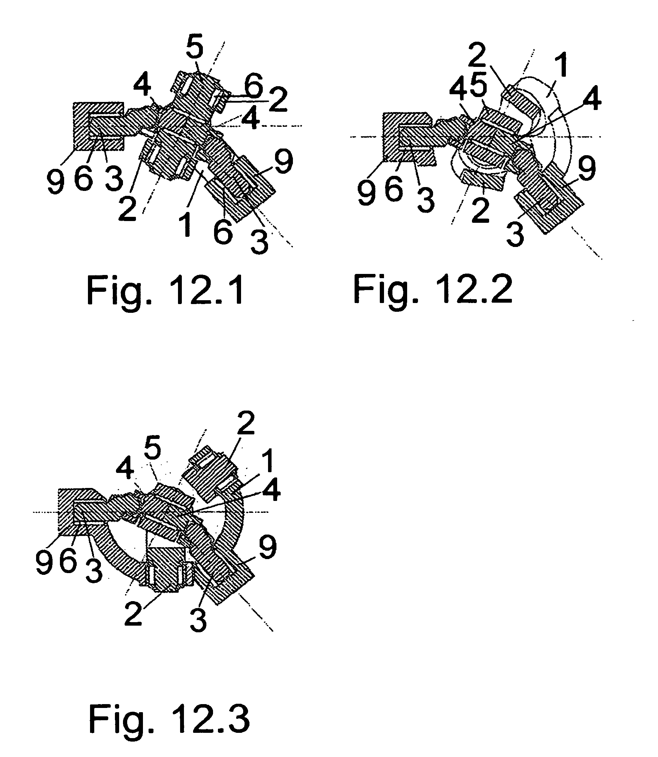

Fig. 12.1 - 12.3 zeigt ein erfindungsgemäßes Gelenk bei einem Beugungswinkel vom 50° und verschiedenen Rotationswinkeln um die in Fig. 1 gezeigte Achse A. Dabei steht die in Fig. 1 gezeigte Achse C, die durch das zentrale Verbindungsteil 2 verläuft, in Fig. 12.1 um 0°, in Fig. 12.2 um 45° und in Fig. 12.3 um 90° versetzt zur Schnittebene der in Fig. 12.1 - 12.3 gezeigten Schnitte. Dieser Versatz kann entsprechend als 0° für einen Rotationswinkel um die in Fig. 1 gezeigte Achse A von 0° definiert werden. Bei einem Rotationswinkel um die Achse A von 42° ist der entsprechende Versatz 45°. Bei einem Rotationswinkel um die Achse A von 90° ist der entsprechende Versatz 90°. Die Rotationswinkel um die Achse A ist dabei für jede der Gelenkhälften immer gleich bzw. konstant. Die Wellenzapfen 3 kehren nach einer Rotation um die Achse A von 0° bis 360° in ihre Anfangsstellung zurück. Die Rotationswinkel können durch Schneiden der Kreistrajektorien der jeweiligen beiden Versatzzentren bestimmt werden.

Tabelle 1 zeigt weiter für einen Beugungswinkel Φ gleich 50° folgende Winkel:
- Rotationswinkel von antreibenden und angetriebenen Wellen 9, d.h. Wellen jeder der ersten und zweiten Gelenkhälften des erfindungsgemäßen Gleichlauf-Universalgelenks um deren jeweilige Rotationsachse A,
- diesen Rotationswinkeln der Wellen 9 entsprechende Rotationswinkel des zentralen Verbindungsteils 5 um eine Achse, welche durch eine hohlzylindrische Bohrung des zentralen Verbindungsteils 5 verläuft, welche Bohrung zur Aufnahme der Zapfen der ersten Kugelgelenkhälften 4 vorgesehen ist,
- diesen Rotationswinkeln der Wellen 9 entsprechende Rotationswinkel eines der als bogenförmige Arme ausgebildeten Innenstücke 2 um die durch die Zapfen des zentralen Verbindungsteils 5 ausgebildete Rotationsachse C.

**Tabelle 1: Sätze von einander entsprechenden Rotationswinkeln von Wellen, zentralem Verbindungsteil und Innenstück.**

| Welle | Verbindungsteil | Innenstück |
|---|---|---|
| 0° | 0° | 25° |
| 14° | 15° | 23° |
| 28° | 30° | 21° |
| 42° | 45° | 18° |
| 58° | 60° | 12° |
| 74° | 75° | 7° |
| 90° | 90° | 0° |

Tabelle 2 zeigt für Beugungswinkel zwischen den Rotationsachsen dieser antreibenden und angetriebenen Wellen 9 zwischen 0 und 50° folgende Winkel:
- Rotationswinkel der ersten Kugelgelenkhälfte 4 um ihre im zentralen Verbindungsteil 5 vorgesehene Rotationsachse,
- Rotationswinkel des Wellenzapfens 3 um die Rotationsachse A der Welle einer Gelenkhälfte,
- Beugungswinkel Φ des Gelenks zwischen 0 und 50°.

**Tabelle 2: Sätze von einander entsprechenden Beugungswinkeln Φ und Rotationswinkeln von Wellenzapfen 3 und erster Kugelgelenkhälfte 4.**

| Rotationswinkel des Wellenzapfens um die Wellenachse A | Rotationswinkel der ersten Kugelgelenkhälfte um ihre im zentralen Verbindungsteil vorge sehene Rotationsachse | Beugungswinkel Φ |
|---|---|---|
| 180° | 0° | 0° |
| 106° | 74° | 10° |
| 111° | 69° | 20° |
| 120° | 60° | 30° |
| 132° | 48° | 40° |
| 147° | 33° | 50° |

Die in Tabelle 2 gezeigten Winkel sind beispielhaft für die in Fig. 1 gezeigte Ausführung und hängen von der Exzentrizität der Wellenzapfen 3 ab.

Das Nadellager 6 im Auge des Innenstücks 2 nimmt Radialkräfte auf. Weitere zwei Nadelführungslager, von denen eines über und eines unter dem Auge des Innenstücks 2 angeordnet sind, nehmen in einer vorteilhaften Ausführung Axialkräfte auf, die auftreten, wenn die Wellen 9 im Uhrzeigersinn oder gegen den Uhrzeigersinn rotieren. In dieser vorteilhaften Ausführung ist der Federring 8 vorteilhaft ersetzt durch eine Mutter, um die Befestigung der Lager und des zentralen Verbindungsteils 5 mit den Innenstücken 2 sicherzustellen.

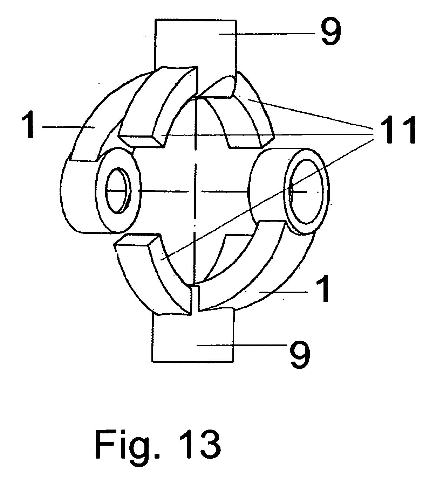

Die in Fig. 13 gezeigten identischen beiden Teile umfassen jeweils für eine Gelenkhälfte eines erfindungsgemäßen Gelenks die Welle 9, welche an einem Ende ein Flansch ausbildet und am anderen Ende den Sitz für die einschenklige Gabel 1 und für zwei symmetrisch ausgebildete Stopperarme 11 ausbildet. Die Stopperarme verzweigen von dem Sitz aus in einer Ebene, die orthogonal zu einer Ebene ist, in der die Gabel 1 von dem Sitz aus abzweigt. Orthogonal zu dieser Ebene hat die Welle an dem Sitz zwischen den Stopperarmen 11 und gegenüber der Gabel eine Abfasung.

Das veranschaulichte Gleichlauf-Universalgelenk zeigt insbesondere die folgenden vorteilhaften Merkmale:
1.) Gleichlauf bei allen Arbeitswinkeln.
2.) Lange Lebensdauer.
3.) Widerstandsfähigkeit gegen aufgezwungene axiale Kräfte.
4.) Kraftübertragung über einen Winkel Φ von mehr als 100°.
5.) Keine Gefahr von Reibungskraftschluß, insofern als daß das Gelenk kein gleitendes Teil hat.
6.) Hohe mechanische Effizienz.
7.) Der Außendurchmesser des Gelenks ist klein, und kann insbesondere kleiner sein als jener in US 7144326 gezeigten Gelenks.
8.) Leicht herzustellen, insbesondere durch Symmetrie der Gelenkhälften.

Die Maximalgröße von Winkeln zwischen Teilen des Gelenks, kann geeignet optimiert werden und wird von zwei Faktoren abhängen:
a) Beugungswinkel
b) Größe der Gabel 1, des Innenstücks 2 und der oben genannten Exzentrizität.

In der gezeigten Ausgestaltung ist die Exzentrizität, d.h. der Versatz der in Fig. 2.1 gezeigten parallelen Linien 5 mm, während das Design des Gelenks es ebenso erlaubt, eine andere Exzentrizität nach Wunsch anzunehmen.

Die Abmessungen von jedem Teil des Gelenks, insbesondere Länge und Durchmesser von Bolzen und Augen des Kreuzes, der Zapfen und Gabeln können gemäß den Beanspruchungen modifiziert werden, die aufgrund des durch das Gelenk übertragenen Drehmoments auferlegt werden.

Herstellungsmodifikationen, sofern sie benötigt werden, umfassen Abfasen, Schlitzen und Entfernung von überschüssigem Metall.

Die Masse des veranschaulichten Gelenks mit einschenkligen Gabeln ist beispielsweise 0,75 kg, wenn es aus Stahl gefertigt ist, und der Außendurchmesser von ihm ist beispielsweise 8,5 cm.

Der maximale Beugungswinkel des veranschaulichten Gelenks ist 50°.

Wie Fig. 2.6 zeigt ist eine Außenkante der Welle, von der aus keine der Gabeln abzweigt, durch Abfasung modifiziert. Diese Maßnahme trägt wie in Fig. 12.3 gezeigt zu dem maximalen Beugungswinkel des Gelenks bei.

Das erfindungsgemäße Gelenk mit einschenkligen Gabeln ermöglicht eine hervorragende Kombination der Eigenschaften Kompaktheit und Leichtigkeit. Durch seine Leichtigkeit, d.h. geringe Masse treten mit ihm in einer Achse mit dem Gelenk nur besonders geringe Momente auf. Das gezeigte erfindungsgemäße Gelenk mit einschenkligen Gabeln ist leicht zusammenzusetzen und zu fertigen.

### Bezugszeichenliste

- A: Wellendrehachse
- B: erste Innenstückdrehachse
- C: zweite Innenstückdrehachse
- 1: Gabel
- 2: Innenstück
- 3: Wellenzapfen
- 4: erste Kugelgelenkhälfte
- 5: zentrales Verbindungsteil
- 6: Nadellager
- 7: Einsatzstück
- 8: Federring
- 9: Welle
- 10: Sperring
- 11: Stopperarm
- ○: Ursprung
- Φ: Beugungswinkel
- m, n: Kurbelmechanismusgelenke

## Patentansprüche

1. Gleichlauf-Universalgelenk, umfassend eine erste und eine zweite Gelenkhälfte und ein zentrales Verbindungsteil (5) zur Verbindung der ersten und zweiten Gelenkhälften miteinander, wobei jede der Gelenkhälften umfaßt:
- eine erste Kugelgelenkhälfte (4), mit einer Verbindung zu dem zentralen Verbindungsteil (5),
- eine Welle (9) mit einer Wellendrehachse (A), wobei die Welle (9) an einem stirnseitigen Ende eine Gabel, insbesondere eine einschenklige Gabel, (1) umfaßt,
- ein Innenstück (2), welches eine erste Innenstückdrehachse (B) und eine zweite Innenstückdrehachse (C) aufweist, welche orthogonal zueinander angeordnet sind,
- eine um die erste Innenstückdrehachse (B) drehbare Verbindung zwischen der Gabel (1) und dem Innenstück (2), wobei die Wellendrehachse (A) und die erste Innenstückdrehachse (B) orthogonal zueinander angeordnet sind,
- einen Wellenzapfen (3) mit einem ersten Ende an dem stirnseitigen Ende der Welle (9) und einem zweiten Ende, das eine zweite Kugelgelenkhälfte ausbildet,
**gekennzeichnet durch** jeweils um die zweite Innenstückdrehachse (C) drehbare Verbindungen zwischen jedem Innenstück (2) der ersten und zweiten Gelenkhälften und dem zentralen Verbindungsteil (5) und
**dadurch**, daß für jede Gelenkhälfte
- die Verbindung der ersten Kugelgelenkhälfte (4) zu dem zentralen Verbindungsteil (5) drehbar um eine Achse ist, die zu der ersten Innenstückdrehachse (B) orthogonal ist,
- der Wellenzapfen (3) eine um die Wellendrehachse (A) drehbare Verbindung zu der Welle (9) hat und die Welle (9) von dem zentralen Verbindungsteil (5) beabstandet,
- ein Drehpunkt eines **durch** die ersten und zweiten Kugelgelenkhälften ausgebildeten Kugelgelenks versetzt zur Drehachse der Verbindung der ersten Kugelgelenkhälfte (4) und dem zentralen Verbindungsteil (5) und versetzt zur Wellendrehachse (A) angeordnet ist.

2. Gleichlauf-Universalgelenk nach Anspruch 1, **dadurch gekennzeichnet, daß** die erste Kugelgelenkhälfte (4) in einer Bohrung gelagert ist, die durch das zentrale Verbindungsteil (5) durch den Schnittpunkt der ersten Innenstückdrehachsen (B) beider Gelenkhälften verläuft.

3. Gleichlauf-Universalgelenk nach Anspruch 2, **dadurch gekennzeichnet, daß** bei wenigstens einer der Gelenkhälften, vorzugsweise in beiden Gelenkhälften, die erste Kugelgelenkhälfte (4) in der Bohrung mit einem Nadellager (6) gelagert ist.

4. Gleichlauf-Universalgelenk nach Anspruch 2 oder 3, **dadurch gekennzeichnet, daß** die erste Kugelgelenkhälfte (4) zweiteilig mit Stirnflächen ausgebildet ist, die in der Bohrung aufeinander treffen.

5. Gleichlauf-Universalgelenk nach einem der vorhergehenden Ansprüche, **dadurch gekennzeichnet, daß** die Innenstücke (2), die Gabeln (1), die ersten Kugelgelenkhälften (4) und/oder die Wellenzapfen (3) für beide Gelenkhälften identisch ausgebildet sind.

6. Gleichlauf-Universalgelenk nach einem der vorhergehenden Ansprüche, **dadurch gekennzeichnet, daß** bei wenigstens einer der Gelenkhälften, vorzugsweise beiden Gelenkhälften, der Wellenzapfen (3) einen Gelenkkopf des Kugelgelenks ausbildet und die erste Kugelgelenkhälfte (4) eine Gelenkpfanne des Kugelgelenks aufweist.

7. Gleichlauf-Universalgelenk nach Anspruch 6, **dadurch gekennzeichnet, daß** die Tiefe der Bohrung gleich dem Radius des Gelenkkopfes ist.

8. Gleichlauf-Universalgelenk nach einem der vorhergehenden Ansprüche, **dadurch gekennzeichnet, daß** in wenigstens einer der Gelenkhälften, vorzugsweise in beiden Gelenkhälften, der Wellenzapfen (3) in einer Bohrung in der Welle (9) gelagert ist.

9. Gleichlauf-Universalgelenk nach Anspruch 8, **dadurch gekennzeichnet, daß** bei wenigstens einer der Gelenkhälften, vorzugsweise in beiden Gelenkhälften, die Wellenzapfen (3) in einer Bohrung in der Welle (9) mit Nadellagern (6) gelagert sind.

10. Gleichlauf-Universalgelenk nach einem der vorhergehenden Ansprüche, **dadurch gekennzeichnet, daß** bei wenigstens einer der Gelenkhälften, vorzugsweise in beiden Gelenkhälften, die einschenklige Gabel (1) zur Verbindung mit dem Innenstück (2) ein Auge aufweist und das Innenstück (2) auf einer der Innenstückdrehachsen (B, C) einen Zapfen mit einer Außennut aufweist.

11. Gleichlauf-Universalgelenk nach Anspruch 10, **dadurch gekennzeichnet, daß** bei wenigstens einer der Gelenkhälften, vorzugsweise beiden Gelenkhälften, das Innenstück (2) ein Auge aufweist und das zentrale Verbindungsteil (5) auf wenigstens einer der zweiten Innenstückdrehachsen (C) zweite Zapfen mit Außennuten aufweist.

12. Gleichlauf-Universalgelenk nach einem der Ansprüche 10 oder 11, **dadurch gekennzeichnet, daß** bei wenigstens einer der Gelenkhälften, vorzugsweise in beiden Gelenkhälften, die ersten und/oder zweiten Zapfen in Einsatzstücken (7) gelagert sind, welche auf den Zapfen mit Außennuten mit Federringen (8) in den Außennuten gesichert sind.

13. Gleichlauf-Universalgelenk nach Anspruch 12, **dadurch gekennzeichnet, daß** die Einsatzstücke (7) zur Lagerung der Zapfen weiterhin Nadellager (6) einfassen, die ebenfalls mit den Federringen gesichert sind.

14. Gelenkwelle mit wenigstens einem Gleichlauf-Universalgelenk nach einem der vorhergehenden Ansprüche.

15. Vorderachse für ein Kraftfahrzeug, umfassend eine Gelenkwelle nach Anspruch 14 für jedes Rad der Vordersachse und zur Kraftübertragung auf diese Räder.

## Claims

1. Constant velocity universal joint, comprising first and second joint halves and a central connecting member (5) for connecting said first and second joint halves with each other, each joint half comprising:
- a first half of a ball joint (4) with a connection with the central connector member (5),
- a shaft (9) with a shaft axis (A), comprising at its face side a fork (1),
- an inner piece (2) provided with a first inner piece axis (B) and second inner piece axe (C), which are orthogonal to each other,
- a connection rotary around the first inner piece axis (B) between said fork (1) and said inner piece (2), wherein the shaft axis (A) and the first inner piece axis (B) are arranged orthogonal with respect to each other,
- a shaft trunnion (3) with a first end at the face side end of said shaft (9) and a second end forming a second ball joint half,
**characterized in** connections rotary around the second inner piece axis (C) between each inner piece (2) and the central connector member (5), respectively, an orthogonal arrangement of said first inner piece axis (B) of first and second joint halves with respect to each other and
**in that** for each joint half
- the connection of the first ball joint half (4) to the central connector member (5) is rotary around an axis, which is orthogonal with respect to the first inner piece axes (B) of the first and second joint halves,
- the inner piece (2) presents a connection to the central connector member (5) rotary around the first inner piece axis (B),
- the shaft trunnion (3) spaces apart from each other the shaft (9) and the central connector member (5) and has a connection to the shaft (9), which is rotary around the shaft axis (A),
- a pivot point of a ball joint formed by the first and second joint halves which is arranged with an offset to the axis of the connection of the first ball joint half (4) and the central connector member (5) and which is arranged with an offset to the shaft axis (A).

2. Constant velocity universal joint according to claim 1, **characterized in that** the first ball joint half (4) is supported in a bore which extends through the central connector member (5) through the intersection of the first inner piece axes (B) of both joint halves.

3. Constant velocity universal joint according to claim 2, **characterized in that** at at least one of said joint halves, preferably at both joint halves, the first ball joint half (4) is supported in the bore with a needle bearing (6).

4. Constant velocity universal joint according to claim 2 or 3, **characterized in that** the first ball joint half (4) is formed in two pieces with face sides, which meet on each other within the bore.

5. Constant velocity universal joint according to any of the preceding claims, **characterized in that** the inner pieces (2), the forks (1), the first ball joint halves (4) and/or the shaft trunnions (3) of both joint halves are formed identically.

6. Constant velocity universal joint according to any of the preceding claims, **characterized in that** at at least one of said joint halves, preferably at both joint halves, the shaft trunnion (3) forms a joint head and the first ball joint half (4) presents a ball joint socket.

7. Constant velocity universal joint according to claim 6, **characterized in that** the depth of the bore is equal to the radius of the joint head.

8. Constant velocity universal joint according to any of the preceding claims, **characterized in that** at at least one of said joint halves, preferably at both joint halves, the shaft trunnion (3) is supported in a bore in the shaft (9).

9. Constant velocity universal joint according to claim 8, **characterized in that** at at least one of said joint halves, preferably at both joint halves, the shaft trunnion (3) is supported in a bore in the shaft (9) with needle bearings (6).

10. Constant velocity universal joint according to any of the preceding claims, **characterized in that** at at least one of said joint halves, preferably at both joint halves, the one arm fork (1) presents for connection with the inner piece (2) comprises an eye and on one of the inner piece axis (B, C) a trunnion having an outer groove.

11. Constant velocity universal joint according to claim 10, **characterized in that** at at least one of said joint halves, preferably at both joint halves, the inner piece (2) presents an eye and said central connection member (5) presents second trunnions with outer grooves on at least one of said second inner piece axis (C).

12. Constant velocity universal joint according to claims 10 or 11, **characterized in that** at at least one of said joint halves, preferable at both joint halves, the first and/or second trunnions are supported with inserts (7), which are secured on the trunnion with outer grooves and lock washers (8) in the outer grooves.

13. Constant velocity universal joint according to claim 12, **characterized in that** the inserts (7) for support of the trunnions surround needle bearings (6) secured with the lock washers.

14. Articulated shaft having at least one constant velocity universal joint according to any of the preceding claims.

15. Front axis of a motor vehicle, comprising an articulated shaft according to claim 14 for each wheel of said front axis and for power transmission onto these wheels.

## Revendications

1. Joint universel homocinétique, comprenant des première et deuxième moitiés de joint et un élément central de jonction (5) pour relier entre elles lesdites première et deuxième moitiés de joint, chacune des moitiés de joint comprenant :
- une première moitié de joint à rotule (4) ayant une liaison audit élément central de jonction (5),
- un arbre (9) ayant un axe de rotation d'arbre (A), ledit arbre (9) comprenant, à une extrémité frontale, une fourche, en particulier une fourche à une seule branche (1),
- une pièce intérieure (2) qui présente un premier axe de rotation de pièce intérieure (B) et un deuxième axe de rotation de pièce intérieure (C) qui sont disposés de façon orthogonale l'un par rapport à l'autre,
- une liaison entre ladite fourche (1) et ladite pièce intérieure (2), qui est tournante autour dudit premier axe de rotation de pièce intérieure (B), ledit axe de rotation d'arbre (A) et ledit premier axe de rotation de pièce intérieure (B) étant disposés de façon orthogonale l'un par rapport à l'autre,
- un tourillon d'arbre (3) ayant une première extrémité à l'extrémité frontale de l'arbre (9) et une deuxième extrémité qui forme une deuxième moitié de joint à rotule,
**caractérisé par** des liaisons entre chaque pièce intérieure (2) des première et deuxième moitiés de joint et ledit élément central de jonction (5), qui sont chacune tournantes autour dudit deuxième axe de rotation de pièce intérieure (C), et
par le fait que, pour chacune des moitiés de joint,
- la liaison de la première moitié de joint à rotule (4) audit élément central de jonction (5) est tournante autour d'un axe qui est orthogonal audit premier axe de rotation de pièce intérieure (B),
- ledit tourillon d'arbre (3) présente une liaison audit arbre (9) qui est tournante autour de l'axe de rotation d'arbre (A), et ledit arbre (9) est espacé par celui-ci de l'élément central de jonction (5),
- un pivot d'un joint à rotule réalisé par lesdites première et deuxième moitiés de joint à rotule est disposé de façon décalée par rapport à l'axe de rotation de la liaison de la première moitié de joint à rotule (4) et ledit élément central de jonction (5) et de façon décalée par rapport à l'axe de rotation d'arbre (A).

2. Joint universel homocinétique selon la revendication 1, **caractérisé par le fait que** la première moitié de joint à rotule (4) est logée dans un perçage qui s'étend au travers dudit élément central de jonction (5) à travers le point d'intersection des premiers axes de rotation de pièce intérieure (B) des deux moitiés de joint.

3. Joint universel homocinétique selon la revendication 2, **caractérisé par le fait que**, dans au moins l'une des moitiés de joint, de préférence dans les deux moitiés de joint, la première moitié de joint à rotule (4) est logée dans le perçage par un roulement à aiguilles (6)

4. Joint universel homocinétique selon la revendication 2 ou 3, **caractérisé par le fait que** ladite première moitié de joint à rotule (4) est réalisée en deux parties à faces frontales qui se rejoignent à l'intérieur du perçage.

5. Joint universel homocinétique selon l'une quelconque des revendications précédentes, **caractérisé par le fait que** les pièces intérieures (2), les fourches (1), les premières moitiés de joint à rotule (4) et/ou les tourillons d'arbre (3) sont réalisés de manière identique pour les deux moitiés de joint.

6. Joint universel homocinétique selon l'une quelconque des revendications précédentes, **caractérisé par le fait que**, dans au moins l'une des moitiés de joint, de préférence dans les deux moitiés de joint, le tourillon d'arbre (3) forme une tête de joint du joint à rotule et ladite première moitié de joint à rotule (4) présente une cavité de joint du joint à rotule.

7. Joint universel homocinétique selon la revendication 6, **caractérisé par le fait que** la profondeur du perçage est égale au rayon de ladite tête de joint.

8. Joint universel homocinétique selon l'une quelconque des revendications précédentes, **caractérisé par le fait que**, dans au moins l'une des moitiés de joint, de préférence dans les deux moitiés de joint, le tourillon d'arbre (3) est logé à l'intérieur d'un perçage dans ledit arbre (9).

9. Joint universel homocinétique selon la revendication 8, **caractérisé par le fait que**, dans au moins l'une des moitiés de joint, de préférence dans les deux moitiés de joint, les tourillons d'arbre (3) sont logés par des roulements à aiguilles (6) à l'intérieur d'un perçage dans ledit arbre (9).

10. Joint universel homocinétique selon l'une quelconque des revendications précédentes, **caractérisé par le fait que**, dans au moins l'une des moitiés de joint, de préférence dans les deux moitiés de joint, ladite fourche à une seule branche (1) présente, pour la liaison avec ladite pièce intérieure (2), un oeil et ladite pièce intérieure (2) présente, sur l'un des axes de rotation de pièce intérieure (B, C), un tenon ayant une rainure extérieure.

11. Joint universel homocinétique selon la revendication 10, **caractérisé par le fait que**, dans au moins l'une des moitiés de joint, de préférence dans les deux moitiés de joint, ladite pièce intérieure (2) présente un oeil et ledit élément central de jonction (5) présente, sur au moins l'un des deuxièmes axes de rotation de pièce intérieure (C), des seconds tenons à rainures extérieures.

12. Joint universel homocinétique selon l'une quelconque des revendications 10 ou 11, **caractérisé par le fait que**, dans au moins l'une des moitiés de joint, de préférence dans les deux moitiés de joint, les premiers et/ou deuxièmes tenons sont logés dans des pièces d'insertion (7) qui sont bloquées sur les tenons à rainures extérieures à l'aide de joncs fendus et élastiques (8) dans les rainures extérieures.

13. Joint universel homocinétique selon la revendication 12, **caractérisé par le fait que** lesdites pièces d'insertion (7) de logement des tenons entourent en outre des roulements à aiguilles (6) qui sont bloqués, eux aussi, à l'aide des joncs fendus et élastiques.

14. Arbre articulé comprenant au moins un joint universel homocinétique selon l'une quelconque des revendications précédentes.

15. Essieu avant pour un véhicule automobile, comprenant un arbre articulé selon la revendication 14 pour chaque roue de l'essieu avant et pour la transmission à ces roues.
